# EUROPEAN PATENT APPLICATION

(11) **EP 3 012 078 A1**
(43) Date of publication of application: **27.04.2016**
(21) Application number: 15188510.0
(22) Date of filing: 06.10.2015
(51) Int. Cl.: B29B 17/00

(54) **METHOD FOR PRODUCING A SUPPLY OBTAINED FROM THE RECYCLING OF PLASTIC MATERIAL OF INDUSTRIAL AND POST-CONSUMER RESIDUES, TO BE USED BY 3D PRINTERS**

(30) Priority: 21.10.2014 AR P140103941
(71) Applicant: Enye Tech, S.A., 1047 Ciudad de Buenos Aires (AR)
(72) Inventor: ACERBO, Horacio, Ciudad de Buenos Aires (AR); TOBÍAS GIRELLI, Noel, Ciudad de Buenos Aires (AR); PALAZZO, Guido, Ciudad de Buenos Aires (AR)
(74) Representative: Isern-Jara, Nuria

(57) **Abstract**

The invention concerns a process that uses a starting material formed by recycled post-consumer and industrial "scrap" thermoplastics based on polyester and polyamide, and the process obtains a supply suitable for 3D printing/additive manufacturing/rapid prototyping with "Fused Deposition Model" (FDM), "Fused Filament Fabrication" (FFF) from these recycled thermoplastics. Said supply can have the form of a solid filament suitable to be used by said "3D" printers, or it can form a pulverulent material to be used in printers such as those with SLS technology. The method includes a series of first stages that consist of: a) Selecting the starting material, which was originally produced by one of the processes of transformation; b) said starting material is duly cleaned; c) once it is cleaned, the material is dried at temperatures greater than 100 ºC but less than 240 ºC; d) the material obtained thereof is driven into an extruder machine where it is subject to temperatures that will vary between 200 °C and 350 °C from the head to the dosing zone to be pelletized; e) the addition of additives to the material may ocurr in the feed zone in order to grant distinctive physicochemical properties to the end product, such as color, hardness, erosion strenght f) from the material resulting from the previous stage either a plastic filament is created and is placed in a spool, or a pulverulent material is created. The supply obtained from the previous stages is subject to an additional heat treatment by varying the process temperature between 100 ºC and 240°C, during a processing time varying between 1 minute and 24 hours.

## Description

### Scope of the Invention

The invention described herein is requested as a patent of invention having its principal object related to a METHOD FOR PRODUCING A SUPPLY OBTAINED FROM THE RECYCLING OF PLASTIC MATERIAL OF INDUSTRIAL AND POST-CONSUMER RESIDUES, TO BE USED BY 3D PRINTERS. This object stands out in the fact that in order to obtain this supply, it is possible to use as raw material those post-consumer recycled thermoplastics and industrial "scrap" based on polyester and polyamide. The supply obtained thereof will be suitable for 3D printing/additive manufacturing/rapid prototyping, which can have the following technologies:
- "Fused Deposition Model" (FDM);
- SLS ("Selective Laser Sintering");
- BJ ("Binding agent Jetting")

It is specifically an original method, where the raw materials are those used plastic products that had already reached the end of their lifecycle (for example: plastic household residues such as bottles, bags, packages, etc.) as well as industrial residues (commonly referred to as "industrial scrap"), which include those plastic remains that are produced in the manufacturing plant and for different reasons they cannot be commercialized (they do not pass the quality control test or they have manufacturing defects, etc.).

Namely, this method has been invented to produce the mentioned supply from industrial and post-consumer residues that contain a compound of polyester and polyamide, and which can be processed according to the conditions specified by the method.

It relates to the obtaining of a supply, which can have the form of a solid filament (plastic filament) suitable to be used by said 3D printers, or which can form a pulverulent material suitable to be used in more sophisticated printers, such as those with SLS technology that use a supply known as "pulverized plastic".

It relates to a new method of manufacturing that can be executed at home or even as a "hobby" such as the connection with "FABLAB" and "REPRAP", which are communities of users who assist each other by sharing information (plans of the printers, design of the products, advances in software, etc.). The users are the ones who employ 3D printing to create plastic objects for different purposes seeking to make the most out of its current and future potential.

In particular this invention reveals a new process, which can be applied by manufacturers of plastic pieces in general, both PET-based and PA-based, mainly because apart from being manufacturers of plastic pieces, they are also the producers of the so-called "scrap" or industrial residues ("SI", for its acronym in Spanish) originated from their activity.

As it is known, frequently the industrial residues (SI) are commercialized to manufacture products that according to their specifications allow the addition of recycled material in dimensions that vary from 0 to 100%.

In this way, provided that industrialists have the equipment of additive manufacturing/3D printing/rapid prototyping, the application of the method described herein will allow them to diversify and include two or more productive processes in the same company.

The supply resulting from the process referred to in this invention could be used in factories, design studios, studios that offer services of 3D printings as well as houses or even at a professional level (such as rapid or educational prototyping, etc.).

It relates to an invention that defines a new combination of ways aimed to achieve a better result. This is why it is an unpredictable and surprising invention even for an expert. Consequently, apart from being new, its constructive and functional idea shows a clear inventive clarity, which meets the conditions demanded by Law to become a patent of invention.

### Background Art

As it is commonly known, it could be possible to state that a 3D printer is a device capable of making design printings in three dimensions, by creating volumetric pieces or mockups from a design outlined in a computer.

It is a modern technology ("software") capable of transforming 2D files in real 3D prototypes, which were originally produced by a process of transformation such as extrusion, extrusion blow moulding, injection, injection blow moulding, moulding or thermoforming, among others.

These processes take place in the previous manufacturing of pieces or components in sectors like architecture and industrial design even when it is currently possible to see their implementation in the manufacturing of medical prosthesis. This is possible because the 3D printing allows every manufactured piece to adapt to the exact characteristics of each particular patient.

They are printers which generally used different types of polymers as printing material. Therefore, we can state that based on their functioning principle, there are two types of best known printers in terms of commercialization: those that print by compacting, which compact the dust masses by layers, and those that print by addition or injecting polymers, in which the material itself is added by layers.

The filament is used in the case of (FDM) printing technology, while the pulverulent material is used for printers with (BJ) and (SLS) printing technology.

Those compacting-type printers can be classified into
- Inkjet 3D printers: which use a binding ink to compact the dust. By using ink it is possible to print in different colors and in a faster way. However, the pieces are more fragile.
- Laser 3D printers: in this case the laser transfers energy to the dust coverting it to polymers. Aftwerwards it is immersed in liquid making the polymerized areas to solidify. Once the immersion process is over and the material finishes to be polimerized, the piece is ready to be handled. The advantage is that the pieces are more resistant, although the process is slower and more expensive.

Once all the layers are printed, the piece must be taken out. The remaining dust, which is removed aided by a vacuum, will be used again in future printings.

Generally, in all these printings the raw material is selected among PETG (amorphous PET), PA (polyamide), PS (polystyrene), ABS (acrylonitrile butadiene styrene copolymer), PLA (polilactic acids) and similar ones.

In no case recycled plastic materials shall be used as raw material to produce the necessary basic supply, that is to say plastic post-consumer items or industrial scrap made of polyethylene-terephthalate (PET) or polyamide (PA), which were originally produced by one of the above mentioned methods.

Furthermore, no methods have been disclosed regarding the obtaining of the mentioned supplies from the recycling of plastic material, which includes the series of stages specified in this invention.

### Brief Description of the Invention - Advantages

The method to produce a supply that is obtained from the recycling of plastic material resulting from industrial and post-consumer residues, and which can be used as raw material in "3D" printers as described herein, includes the following series of operating stages:

### First Stage: (selection)

The starting material is obtained. Said material includes post-consumer or industrial scrap plastics made of polyethylene terephthalate (PET) or polyamide (PA), which were originally produced by a process of transformation such as extrusion, extrusion blow moulding, injection, injection blow moulding, moulding or thermoforming, among others.

### Second Stage: (cleaning)

The mentioned starting material is duly cleaned. This means that all those objects or their parts that do not contain polyester or polyamide are removed, whether manually or with the help of mechanical resources.

This cleaning stage can include the use of chemical products (by using surfactants).

For example, if we analyze the case of beverage bottles, the material to be removed will be: the polyethylene (PE) label, the glue between the label and the bottle and the cap and safety seal made of polypropylene (PP). As a result, the PET bottle is ready to move forward to the next stages.

The same behavior applies when plastic materials that do not contain polyamide (PA) need to be removed, while those that do contain this type of material are kept.

### Third Stage: (drying)

Once it is cleaned, the material obtained from the previous stage must be dried. This material is exposed to temperatures greater than 100 ºC but less than 240 ºC when polyethylene terephthalate (PET) material is processed.

When polyamide (PA) material is processed, it is dried at temperatures between 100 ºC and 180 ºC.

In both cases the time will vary depending on the quantity and characteristics of the material, which can vary between 1 (one) minute and 24 (twenty-four) hours, with or without air extraction or by applying vacuum.

### Fourth Stage: (modification by adding additives)

The material obtained from the third stage can be driven into a double strew extruder machine, where temperatures will vary between 200 °C and 350 °C from the head to the dosing zone to be pelletized at the end of the process.

The addition of additives to plastic material (addition of non-plastic materials) preferably ocurrs in the feed zone in order to grant distinctive physicochemical properties to the end product, such as color, hardness, erosion strenght or any other way of modification that is generally applied.

These modifications may consist of the addition of reinforcement material (generally between 0% and 50% of the total weight of the resulting material) named "load", obtaining as a result a compound material (for example: sawdust).

### Fifth Stage (production of the supply for 3D printing)

### a) Plastic Filament Winding

From the material obtained in the third stage, or from the fourth stage in the case of additive material, a plastic filament is created by using a single strew extruder. There the temperature varies from the head to the dosing zone between 200 °C and 350 ºC for the material to be winded at the exit in the form of a filament with a diameter that can vary between 1 mm and 4mm.

There are single-strew extruders of dimensions similar to those that belong to some of the 3D printers, and which are commonly referred to as at-home filament extruder or "filastruder".

A conventional spool depending on the diameter of the filament can have as many meters as desired. Usually, spools are made of 1 kg. and 500 gr.

### b) Pulverulent Material

In this case, the material obtained from the third stage enters a blade mill to be pulverized and sieved until the particles comply with the dimensions required by the SLS technology of the 3D printing equipment.

### Sixth Stage: (heat treatment)

This stage distinguishes the manufacturing method of the invention herein from the Prior Art.

It is a heat treatment, which applies heat to the material at a certain temperature and during a specific time.

It is applied to the supply obtained in the previous stages.

It is necessary for obtaining a material in ideal conditions for feed and use in 3D printings. In this way, it is possible to assure a very effective final performance, which is greater than the performance from the same material but without treatment, thus achieving a successful outcome.

This treatment has mainly two reasons: on one hand, it encourages the cristallization of the polymer in a uniform manner in order to achieve a controlled flow and to minimize undesired thermal phenomena between stopping and starting during the manufacturing process of the 3D printing. On the other hand, it prepares the materials according to the requirements of the product to be manufactured as well as it eliminates the moisture that they retained for being highly hygroscopic.

In this stage the supply obtained in the fifth stage is subject to an additional thermal process, where the temperature varies between 100 ºC and 180 ºC in the case of polyamide (PA) and between 100 ºC and 240 ºC in the case of polyethylene terephthalate (PET); whereas the time of said heat treatment in both cases can vary between 0 minutes and 24 hours.

As it was already mentioned, the method for creating a supply from the recycle of plastic material referred to in this patent can be put into practice in three basic ways, where this sixth stage of the process varies depending on each of the following uses:

### a) Industrial Use

In this case the heat treatment of the supply is carried out during the process (in-line heat treatment) or at the end of the process (directly to the end product). This means that the material will go through high temperature zones (according to the above mentioned specifications) before being winded or packed.

### b) Professional Use

It includes a device with dimensions similar to the ones of a 3D printer, which after the third stage will pulverize or wind the material depending on each request, before feeding the 3D printer with it.

### c) Home Use

The material obtained from the fifth stage by a home-made extruder can be treated by using a conventional oven, whether electric or by gas.

### Inventive Activity

No process to create plastic supplies from recycled material known to this day sets out or suggests the constructive solution mentioned above. This is why it is a proposal not only new but also clearly ingenious.

### Description of Embodiments

The following are some of the preferred embodiments that implement this patent. It must be noted that they should not be seen with a limited or exclusive scope of protection of the invention herein. On the contrary, they are mere examples to clarify the basic idea on which the invention is based.

### Embodiment 1:

It entailed the recycling of bottles made of polyethylene terephthalate (PET), all of which were previously cleaned, grinded and duly dried.

Each of the filaments obtained were subject to heat treatment as per described in the sixth stage of the process explained above. This was useful to create small pieces of approximately 10 cm³.

Therefore, it could be verified that by using a bottle of 500 ml as raw material, it was possible to obtain a filament of approximately one metre and a half with a diameter of approximately 3 mm, which weighted approximately 15 grams.

### Embodiment 2:

It entailed the recycling of non-specific PET preforms (industrial "scrap"), which were all cleaned, grinded and dried.

Then they were extruded in sets of filaments of 500 grams and 1000 grams.

In each case they were subject to an in-line heat treatment, which was already explained in the sixth stage of the mentioned process, and the end product was vacuum-packed.

As a result it was possible to obtain a filament capable of working effectively in the conventional "3D" printers mentioned above.

Having described and exemplified the nature and main object of the invention herein as well as the way in which it can be executed, the ownership and exclusive rights are hereby claimed as follows:

## Claims

1. **METHOD FOR PRODUCING A SUPPLY OBTAINED FROM THE RECYCLING OF PLASTIC MATERIAL OF INDUSTRIAL AND POST-CONSUMER RESIDUES, TO BE USED BY "3D" PRINTERS,** comprising a starting material made of post-consumer recycled thermoplastics and industrial "scrap" based on polyester and polyamide, from where it is possible to obtain a supply suitable for 3D printing/additive manufacturing/rapid prototyping with "Fused Deposition Model" (FDM), "Fused Filament Fabrication" (FFF), BJ "Binding agent Jetting" or similar technologies. Such is the case of the printing process named SLS ("Selective Laser Sintering"), where said supply can have the form of a solid filament suitable to be used by said "3D" printers, or which can form a pulverulent material to be used in more sophistacated printers, such as those with SLS technology. Moreover, this method includes a series of first stages that consist of: a) Selecting the starting material, which was originally produced by one of the processes of transformation; b) said starting material is duly cleaned; c) once it is cleaned, the material is dried at temperatures greater than 100 ºC but less than 240 ºC; d) the material obtained thereof is driven into an extruder machine where it is subject to temperatures that will vary between 200 °C and 350 °C from the head to the dosing zone to be pelletized; e) the addition of additives to the material may ocurr in the feed zone in order to grant distinctive physicochemical properties to the end product, such as color, hardness, erosion strenght,etc. f) from the material resulting from the previous stage either a plastic filament is created by using a single strew extruder and is placed in a spool, or a pulverulent material, which is **characterized by** the supply obtained from the previous stages, is subject to an additional heat treatment by varying the process temperature between 100 ºC and 240°C, during a processing time that varies between 1 minute and 24 hours.

2. **METHOD FOR PRODUCING A SUPPLY OBTAINED FROM THE RECYCLING OF PLASTIC MATERIAL OF INDUSTRIAL AND POST-CONSUMER RESIDUES, TO BE USED BY "3D" PRINTERS,** according to claim 1, characterized because the required supply is obtained from a starting material that consists of plastic post-consumer items or industrial scrap made of polyethylene-terephthalate (PET).

3. **METHOD FOR PRODUCING A SUPPLY OBTAINED FROM THE RECYCLING OF PLASTIC MATERIAL OF INDUSTRIAL AND POST-CONSUMER RESIDUES, TO BE USED BY "3D" PRINTERS** according to claim 1, characterized because the required supply is obtained from a starting material that consists of plastic post-consumer items or industrial scrap made of polyamide (PA).

4. **METHOD FOR PRODUCING A SUPPLY OBTAINED FROM THE RECYCLING OF PLASTIC MATERIAL OF INDUSTRIAL AND POST-CONSUMER RESIDUES, TO BE USED BY "3D" PRINTERS, PRINTERS** according to claim 1, characterized because the plastic filament that is obtained in stage f) in order to be winded at the exit of the extruder has a diameter that can vary between 1 mm and 4mm.

5. **METHOD FOR PRODUCING A SUPPLY OBTAINED FROM THE RECYCLING OF PLASTIC MATERIAL OF INDUSTRIAL AND POST-CONSUMER RESIDUES, TO BE USED BY "3D" PRINTERS,** according to claim 1, characterized because in the dying stage temperatures between 100 ºC and 180 ºC are used when processing a material made of polymide (PA).

6. **METHOD FOR PRODUCING A SUPPLY OBTAINED FROM THE RECYCLING OF PLASTIC MATERIAL OF INDUSTRIAL AND POST-CONSUMER RESIDUES, TO BE USED BY "3D" PRINTERS,** according to claim 1, characterized because the additional heat treatment varies the process temperature between 100 ºC and 180 ºC in the case of polyamides (PA).

7. **METHOD FOR PRODUCING A SUPPLY OBTAINED FROM THE RECYCLING OF PLASTIC MATERIAL OF INDUSTRIAL AND POST-CONSUMER RESIDUES, TO BE USED BY "3D" PRINTERS,** according to claim 1, characterized because the additional heat treatment varies the process temperature between 100 ºC and 240 ºC in the case of polyethylene-terephthalate (PET).
